Europäisches Patentamt

European Patent Office

Office européen des brevets

(11) Publication number: **0 244 936**
**B1**

## EUROPEAN PATENT SPECIFICATION

(45) Date of publication of patent specification: **17.10.90**

(21) Application number: **87302442.6**

(22) Date of filing: **20.03.87**

(51) Int. Cl.⁵: **B 01 D 46/40,** G 01 N 1/22,
G 01 N 1/24, G 01 N 27/416

(54) **Filter assembly for a gas sampling system.**

(30) Priority: **28.04.86 US 856747**

(43) Date of publication of application:
**11.11.87 Bulletin 87/46**

(45) Publication of the grant of the patent:
**17.10.90 Bulletin 90/42**

(84) Designated Contracting States:
**DE ES FR GB IT**

(56) References cited:
**FR-A-2 182 500**
**US-A-2 507 461**
**US-A-3 992 177**
**US-A-4 286 472**

(73) Proprietor: **INTERNATIONAL CONTROL
AUTOMATION FINANCE S.A.
16 Rue des Bains
Ville de Luxembourg (LU)**

(72) Inventor: **Woolbert, Gordon Davies
6858 Burgundy Avenue NW
North Canton Ohio 44720 (US)**
Inventor: **Cooper, Marshall Hilton
33750 Arthur Road
Solon Ohio 44139 (US)**
Inventor: **Turrin Arnold D.
2962 Worrell Road
Willoughby Hills Ohio 44094 (US)**

(74) Representative: **Purvis, William Michael
Cameron et al
D. Young & Co. 10 Staple Inn
London WC1V 7RD (GB)**

Courier Press, Leamington Spa, England.

# Description

The invention relates in general to gas sampling systems and in particular to a probe assembly for such a system.

In systems for analyzing process gases and combustion flue gases, such as that known from Patent Specification US-A-3 960 500, a sample probe extends into a sample area to draw a gas sample into the analyzing system. To prevent particulate matter from being entrained by the probe and entering the analyzing system, the end of the probe is covered with a filter assembly.

Probe assemblies have been proposed, such as that illustrated in Patent Specification US-A-4 286 472, which include a filter in the form of a flexible sleeve connected to an adapter which fits over the sample probe. A V-shaped deflector plate attached to the adapter prevents the gas flow in the sample area from impinging directly on the filter. The deflector plate also sets up gas currents around the filter which cause the filter to flex or flutter, thus dislodging particulate matter which tends to become trapped in the filter material.

Certain disadvantages became apparent with such a design. Firstly, improper alignment of the filter deflector will result in impingement of particulate matter directly on the filter and result in clogging of the filter. Secondly, and of equal importance, substantially uni-directional gas flow is required in order for the filter assembly to function. In many applications, such as in a coal mill pulverizer, the heavy concentration of particulate matter and the swirling, multi-directional flow of the coal-and-air mixture make the use of such a prior art filter assembly impractical.

Another well-known technique includes the use of a perforated metallic shield to protect a sensor inserted directly in the gas stream from bombardment by particulates in the gas stream. While this design does not require precise alignment, it allows the direct impingement of particulate matter which is smaller than the perforations upon the filter.

According to the invention there is provided a probe assembly for a gas sampling system comprising:

a probe for withdrawing a sample of test gas from a sample area; a filter attached to the probe for filtering the gas drawn into the probe; and

a filter shield assembly surrounding the filter and comprising a plurality of spaced apart inner shields formed as a circle, a plurality of spaced outer shields radially spaced from the inner shields, and means to support the inner and outer shields concentrically to form an overlapping pattern with the outer shields overlapping the spaces between the inner shields and effective to prevent direct impingement of the test gas anywhere on the filter.

Such a probe assembly can be used in a coal mill monitoring system and can be operable to prevent direct impingement of particulate matter anywhere on the filter. The probe assembly preferably includes an adapter attached to the probe for withdrawing a sample of test gas from the coal mill. The filter can be a flexible, heat-resistant, ceramic filter attached to the adapter for filtering the test gas drawn into the probe. The inner shields of the filter shield assembly are preferably offset from the filter to provide sufficient gas flow along the sides of the filter to set up gas currents causing flexing or fluttering of the filter thereby dislodging any particulate matter in the filter.

When used as a gas sampling system for a coal mill, the probe assembly can prevent particulate matter from entering the analyzing system and, at the same time, prevent direct impingement of particulate matter on the filter.

The invention is diagrammatically illustrated by way of example in the accompanying drawings, in which-:

Figure 1 is a sectional view of a coal mill illustrating the location therein of a probe assembly according to the invention;

Figure 2 is an exploded view of a filter assembly of the probe assembly of Figure 1;

Figure 3 is a longitudinal sectional view of the filter assembly of Figure 2;

Figure 4 is a longitudinal sectional view of a filter shield assembly of the filter assembly of Figure 2;

Figure 5 is an end view of the filter shield assembly of Figure 4; and

Figure 6 is a view of the opposite end of the filter shield assembly of Figure 4 to that shown in Figure 5.

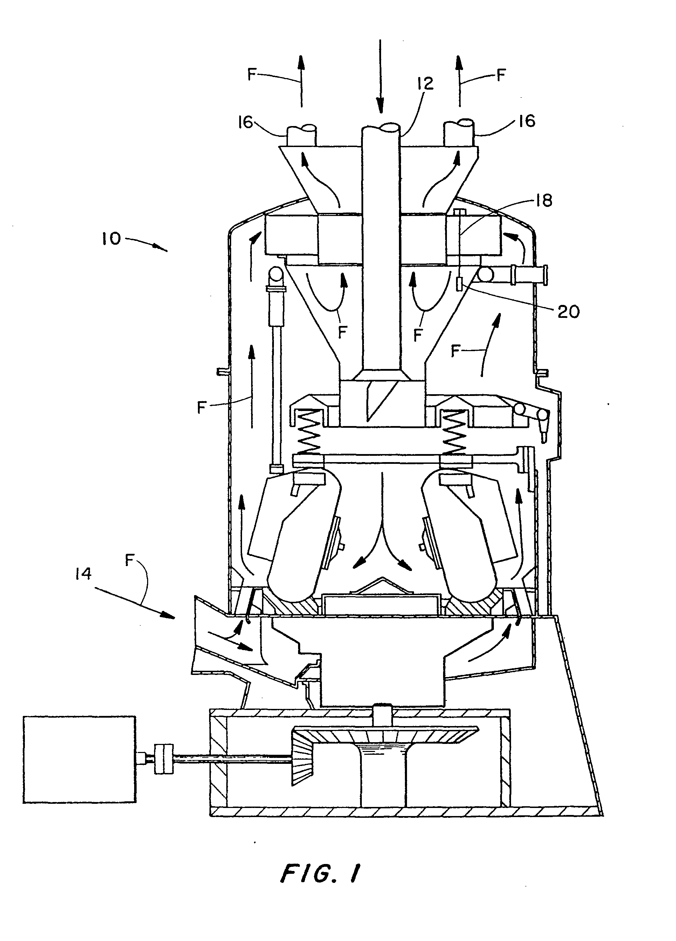

Referring to the drawings and firstly to Figure 1, a coal mill 10, has coal fed thereto through a raw coal feed inlet 12. Air enters the coal mill 10 through an air inlet 14 and, as indicated by arrows F, mixes with the coal pulverized in the coal mill 10. The pulverized coal flows past a coal mill monitor probe 18 provided with a filter assembly 20 and then exits through coal-and-air discharge openings 16.

The filter assembly 20 is used to prevent pulverized coal from being entrained by the coal mill monitor probe 18 and entering a coal mill monitor analyzer (not shown) where it could cause irreparable harm.

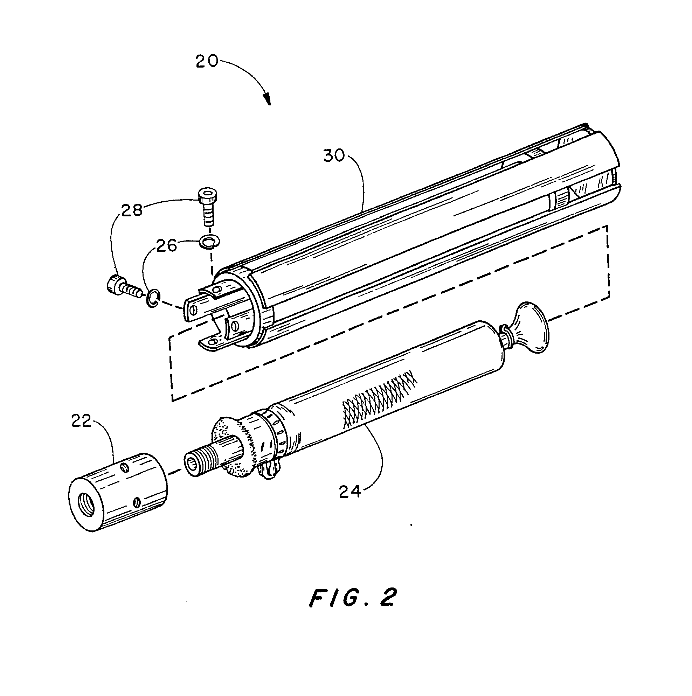

Referring to Figure 2, the filter assembly 20 is shown to comprise three subassemblies: a probe adapter 22; a filter 24; and a filter shield assembly, generally designated 30. The probe adapter 22 can be used with a gas sampling probe of the kind illustrated in Patent Specification US-A-3 960 500 and is normally made of steel. However, other materials, such as aluminum or other metals that can be manufactured by a machining or a casting process, could be used. The filter 24 can be of the kind illustrated in Patent Specification US-A-4 286 472 having the form of a flexible sleeve formed from a heat resistant ceramic material.

The filter shield assembly 30 is normally made of steel and is attached to the probe adapter 22 by bolts 28. Lock washers 26 are used to prevent the bolts 28 from loosening in service. The filter shield assembly 30 includes a plurality of inner shields 32 and a plurality of outer shields 34. Shield rings 36 are located between the inner and outer shields 32 and 34, respectively, and are welded thereto. The shield rings 36 provide support for and spacing between the inner and outer shields 32 and 34. A bolt hole 38 is provided in one end of each inner shield 32 for attachment of the filter shield assembly 30 to the probe adapter 22.

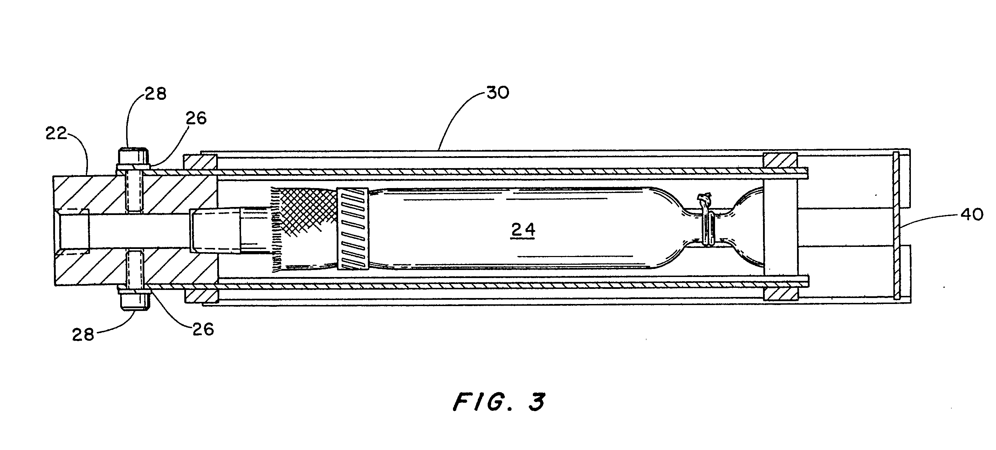

Referring to Figure 3, the dimensions of the filter shield assembly 30 can be varied to suit the width and length of various sized filters 24 as long as the same general proportions are substantially maintained. When used with flexible filters of the kind discussed above, it is normally desirable to provide a suitable clearance as shown between the free end of the filter 24 and an end plate 40 to prevent unnecessary abrasion of the free end of the filter 24.

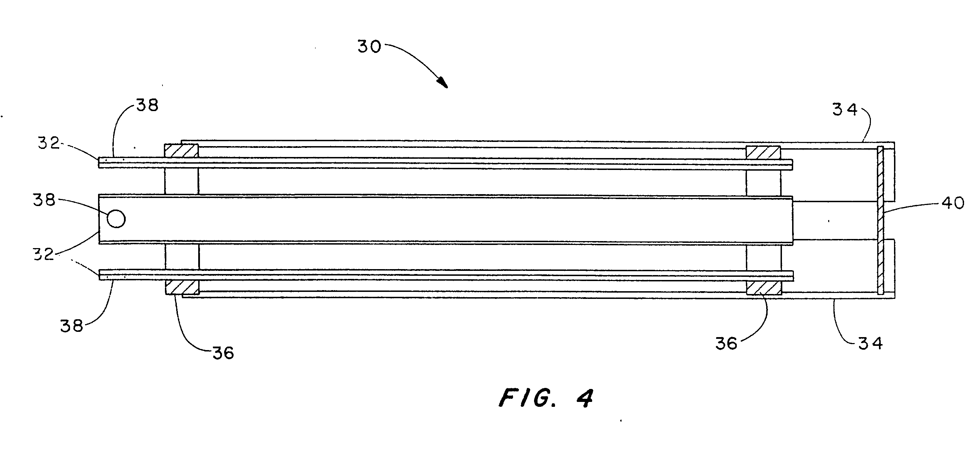

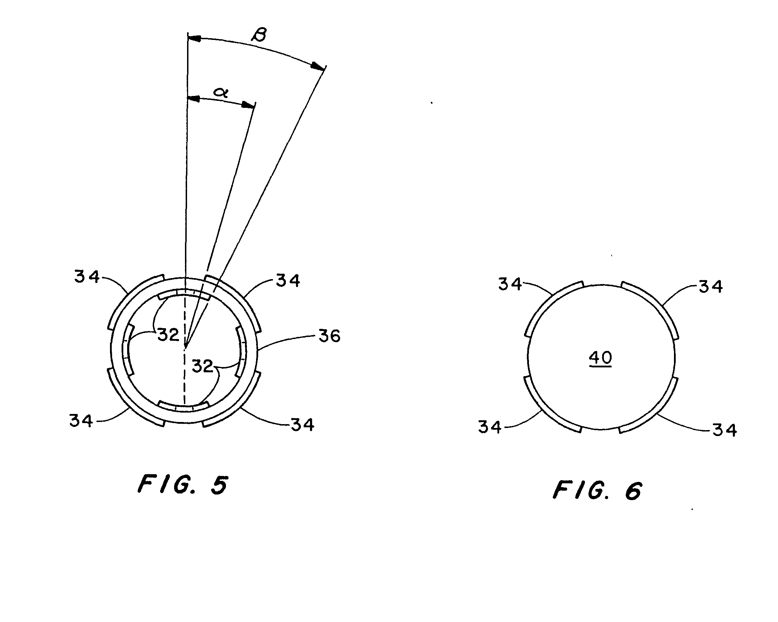

Referring to Figures 4 and 5, the inner and outer shields 32 and 34 of the filter shield assembly 30 overlap one another and are regularly spaced by and welded to the shield rings 36. In the preferred embodiment, the inner shields 32 each form a 50 degree segment, the outer shields 34 each form a 56 degree segment, and the angle of overlap (β minus α) between the inner and outer shields 32 and 34 is 8 degrees. This configuration permits the ingress and egress of air currents which exist within the coal mill 10 while preventing direct impingement of the coal and air flow, as represented by the arrows F, on the filter 24, as will be described more fully hereinafter. The end plate 40 is welded to the opposite end of the outer shields 34 to prevent direct entrainment of pulverized coal into the end of the filter shield assembly 30.

In operation, the filter assembly 20 is threaded onto the end of the probe 18 installed in the coal mill 10 and is positioned within the coal and air flow F so that the flow F strikes the outer shields 34. As the flow F passes through the filter assembly 20, the flow F must make two abrupt 90 degree turns because of the overlap between the outer and inner shields 34 and 32. This prevents direct impingement of the coal and air flow F on the filter 24. When used with flexible filters of the type discussed previously, air currents will be set up which will cause the filter 24 to flutter. This causes the fabric which forms the filter constantly to flex as it filters out particulate matter from the coal and air being drawn into the probe 18, thus dislodging particles which tend to be trapped within the fabric fibres. Therefore, it is also normally desirable to provide a suitable clearance, as shown between the free end of the filter 24 and the end plate 40, to prevent unnecessary abrasion of the free end of the filter 24.

Additional rows of outer shields could be added to the filter shield assembly if desired for more protection against direct impingement of particulate matter.

## Claims

1. A probe assembly for a gas sampling system comprising:

a probe (18) for withdrawing a sample of test gas from a sample area;

a filter (24) attached to the probe (18) for filtering the gas drawn into the probe (18); and

a filter shield assembly (30) surrounding the filter (24) and comprising a plurality of spaced apart inner shields (32) formed as a circle, a plurality of spaced outer shields (34) radially spaced from the inner shields (32), and means (36) to support the inner and outer shields concentrically to form an overlapping pattern with the outer shields (34) overlapping the spaces between the inner shields (32) and effective to prevent direct impingement of the test gas anywhere on the filter (24).

2. A probe assembly according to claim 1, including an adapter (22) formed as a cylindrical member having a first threaded bore formed therein for engagement with the probe (18).

3. A probe assembly according to claim 2, wherein the cylindrical member includes a second threaded bore formed therein for engagement with the filter (24).

4. A probe assembly according to claim 2, wherein the cylindrical member includes means for attaching the filter shield assembly (30) thereto.

5. A probe assembly according to claim 4, wherein said attaching means includes a plurality of threaded bores.

6. A probe assembly according to claim 1, wherein the filter is formed from a flexible, heat resistant, ceramic material.

7. A probe assembly according to claim 1, wherein the filter shield assembly (30) is offset from the filter (24) to provide sufficient gas flow along the sides of the filter to set up gas currents to flex the filter (24) to dislodge any particulate matter trapped in the filter (24).

8. A probe assembly according to any one of claims 1 to 7, wherein the means to support the inner (32) and outer (34) shields comprises at least two circular rings (36).

9. A probe assembly according to any one of claims 1 to 7, including an end plate (40) attached to one end of the outer shield (34) to prevent entrainment of particulates on the filter (24).

10. A probe assembly according to any one of claims 1 to 7, wherein the overlapping pattern of the support means is formed at an angle of approximately 8 degrees.

11. A probe assembly according to any one of claims 1 to 7, wherein the length of the filter shield assembly (30) is substantially greater than its diameter.

12. A probe assembly according to any one of claims 1 to 11, when used to sample gas in a coal mill.

## Patentansprüche

1. Sondenaufbau für ein System für die Gasprobennahme mit:

einer Sonde (18) zum Entnehmen einer Probe eines Testgases aus einem Probebereich,

einem Filter (24), welcher an der Sonde (18) angebracht ist, um das Gas, welches in die Sonde (18) eingesogen wird, zu filtern, und

einem Filterschutzaufbau (30), welcher den Filter (24) umgibt und eine Mehrzahl von voneinander beabstandeten inneren Schutzschilden (32) aufweist, die als Kreis ausgebildet sind, eine Mehrzahl von voneinander beabstandeten äußeren Schutzschilden (34) aufweist, die in radialer Richtung von den inneren Schutzschilden (32) beabstandet sind, und eine Einrichtung (36) aufweist, um die inneren und äußeren Schutzschilde konzentrisch zu halten, um eine überlappende Anordnung zu bilden, bei welcher die äußeren Schutzschilde (34) die Zwischenräume zwischen den inneren Schutzschilden (32) überlappen und welche in der Weise wirksam ist, daß sie das direkte Auftreffen des Testgases irgendwo auf dem Filter (24) verhindert.

2. Sondenaufbau nach Anspruch 1, einschließlich eines Adapters (22), der als zylindrisches Teil ausgebildet ist, welches eine erste darin ausgebildete Gewindebohrung hat, um mit der Sonde (18) in Eingriff zu treten.

3. Sondenaufbau nach Anspruch 2, wobei das zylindrische Teil eine zweite Gewindebohrung aufweist, die darin ausgebildet ist, um mit dem Filter (24) in Eingriff zu treten.

4. Sondenaufbau nach Anspruch 2, wobei das zylindrische Teil eine Einrichtung aufweist, um den Filterschutzschildaufbau (30) daran anzubringen.

5. Sondenaufbau nach Anspruch 4, wobei die Anbringeinrichtung eine Mehrzahl von Gewindebohrungen aufweist.

6. Sondenaufbau nach Anspruch 1, wobei der Filter aus einem flexiblen, wärmebeständigen, keramischen Material gebildet ist.

7. Sondenaufbau nach Anspruch 1, wobei der Filterschutzschildaufbau (30) gegenüber dem Filter (24) versetzt ist, um einen ausreichenden Gasstrom entlang der Filterseiten bereitzustellen, um Gasströme einzustellen, um den Filter (24) zu biegen, um so jegliches Teilchenmaterial, welches sich an dem Filter (24) verfangen hat, zu entfernen.

8. Sondenaufbau nach einem der Ansprüche 1 bis 7, wobei die Einrichtung zum Haltern der inneren (32) und der äußeren (34) Schutzchilde zumindest zwei kreisförmige Ringe (36) aufweist.

9. Sondenaufbau nach einem der Ansprüche 1 bis 7, einschließlich einer Endplatte (40), welche an einem Ende des äußeren Schutzschildes (34) angebracht ist, um das Mitreißen von Teilchen auf den Filter (24) zu verhindern.

10. Sondenaufbau nach einem der Ansprüche 1 bis 7, wobei die Überlappungsanordnung der Halterungseinrichtung mit einem Winkel von näherungsweise 8° ausgebidet wird.

11. Sondenaufbau nach einem der Ansprüche 1 bis 7, wobei die Länge des Filterschutzschildaufbaues (30) beträchtlich größer als sein Durchmesser ist.

12. Sondenaufbau nach einem der Ansprüche 1 bis 11, welcher für die Probennahme von Gas in einer Kohlenmühle verwendet wird.

**Revendications**

1. Ensemble de filtre pour système d'échantillonnage de gaz comprenant:

une sonde (18) pour prélever un échantillon de gaz de test d'une zone d'échantillonnage,

un filtre (24) fixé à la sonde (18) pour filtrer le gaz aspiré dans la sonde (18), et

un ensemble d'écran de filtre (30) entourant le filtre (24) et comprenant une pluralité d'écrans internes séparés (32) formés en cercle, une pluralité d'écrans externes séparés (34), radialement espacés des écrans internes (32), et un moyen (36) servant à supporter concentriquement les écrans internes et externes afin de former un modèle de recouvrement avec les écrans externes (34) recouvrant les espaces entre les écrans internes (32) et efficace pour empêcher l'incidence directe du gaz de test sur quelque point du filtre que ce soit (24).

2. Ensemble de sonde selon la revendication 1, comprenant un adaptateur (22) formé comme un élément cylindrique ayant un premier alésage fileté formé dans celui-ci pour engagement avec la sonde (18).

3. Ensemble de sonde selon la revendication 2, dans lequel l'élément cylindrique comprend un deuxième alésage fileté formé dans celui-ci par engagement avec le filtre (24).

4. Ensemble de sonde selon la revendication 2, dans lequel l'élément cylindrique comporte un moyen servant à fixer l'ensemble d'écran de filtre (30) sur celui-ci.

5. Ensemble de sonde selon la revendication 4, dans lequel ledit moyen de fixation comprend une pluralité d'alésages filetés.

6. Ensemble de sonde selon la revendication 1, dans lequel le filtre est formé à partir d'un matériau de céramique flexible, résistant à la chaleur.

7. Ensemble de sonde selon la revendication 1, dans lequel l'ensemble d'écran de filtre (30) est décalé du filtre (24) pour fournir un écoulement de gaz suffisant le long des côtés du filtre pour former des courants de gaz afin d'infléchir le filtre (24) dans le but de déloger toute matière particulaire piégée à l'intérieur du filtre (24).

8. Ensemble de sonde selon l'une quelconque des revendications 1 à 7, dans lequel le moyen pour supporter les écrans internes (32) et externes (34) comprend au moins deux anneaux circulaires (36).

9. Ensemble de sonde selon l'une quelconque des revendications 1 à 7, comprenant une plaque d'extrémité (40) fixée à une extrémité de l'écran externe (34) afin d'empêcher l'entraînement de particules sur le filtre (24).

10. Ensemble de sonde selon l'une quelconque des revendications 1 à 7, dans lequel le modèle de recouvrement du moyen de support est formé à un angle d'approximativement 8 degrés.

11. Ensemble de sonde selon l'une quelconque des revendications 1 à 7, dans lequel la longueur de l'ensemble d'écran de filtre (30) est sensiblement supérieure à son diamètre.

12. Ensemble de sonde selon l'une quelconque des revendications 1 à 11, lorsqu'utilisé pour échantillonner un gaz dans un broyeur à charbon.

FIG. I

1

EP 0 244 936 B1

FIG. 2

2

FIG. 3

FIG. 4

*FIG. 5*

*FIG. 6*